# DEMANDE DE BREVET EUROPEEN

(11) **EP 1 802 073 A1**
(43) Date de publication de la demande: **27.06.2007**
(21) Numéro de dépôt: 05301082.3
(22) Date de dépôt: 20.12.2005
(51) Int. Cl.: H04L 29/06, G06F 3/12

(54) **Procédé pour fournir un service d'impression et serveur pour la mise en oeuvre de ce procédé**

(71) Demandeur: Alcatel Lucent, 75008 Paris (FR)
(72) Inventeur: Boussard, Mathieu, 91460 Marcoussis (FR); Hebbar, Abdelkrim, 91400 Orsay (FR); Bataille, Fabien, 92160 Antony (FR)
(74) Mandataire: Korakis-Ménager, Sophie

(57) **Abrégé**

Procédé pour fournir un service d'impression d'au moins une information en provenance d'un terminal de radiocommunication (1), situé dans un réseau de communication (4)
caractérisé en ce que l'information transite via un serveur de contexte et de service (2) situé dans le réseau (4) vers une imprimante (6) sélectionnée par le serveur de contexte et de service (2) en fonction des données contextuelles de l'utilisateur du terminal (1).

## Description

La présente invention concerne un procédé pour fournir un service d'impression. L'invention concerne également un serveur pour la mise en oeuvre de ce procédé.

Un des domaines d'application, non exclusif, de l'invention est celui des terminaux mobiles de radiocommunication fonctionnant dans un système de radiocommunication.

Quand un utilisateur d'un terminal dans des réseaux de télécommunication souhaite communiquer avec un autre utilisateur, il a maintenant le choix entre plusieurs possibilités, de plus en plus nombreuses : téléphone fixe, téléphone mobile, courrier électronique, message instantané, message court (SMS : Short Message System), message multimédia (MMS : Multimedia Message System).

Il est souhaitable de faciliter ce choix, en personnalisant automatiquement l'offre de services de télécommunication, en fonction des informations contextuelles de l'utilisateur du terminal.

On entend par informations contextuelles :
- la localisation de l'utilisateur, c'est à dire la position géographique actuelle de l'utilisateur s'il peut se déplacer sur plusieurs sites distincts ;
- les caractéristiques du réseau (ou des réseaux) auquel il est abonné, notamment la bande passante utilisable ;
- les caractéristiques des services auxquels il est abonné, par exemple le service de visiophonie ;
- les caractéristiques du terminal (ou des terminaux) qui sont à sa disposition sur chaque site, notamment le type de données qu'il peut recevoir (sons, textes, vidéo) et le type de réseau à sa disposition ;
- les préférences de l'utilisateur, notamment en fonction de l'heure et de son agenda ;
- la liste des coordonnées de ses contacts téléphoniques.
- toute information pouvant avoir un intérêt pour décrire le contexte de l'utilisateur (météo, présence de contacts, etc).

D'autre part les utilisateurs de terminaux en réseau avec leur entreprise deviennent désireux non seulement de communiquer entre eux mais aussi de pouvoir imprimer leurs travaux sur n'importe quelle imprimante disponible.

Diverses solutions ont été proposées dans l'art antérieur pour permettre une impression sur n'importe quelle imprimante disponible dan un réseau d'imprimante donné.

Ceci nécessite le fait d'avoir au préalable installé chaque driver d'imprimante relatif à chaque imprimante du réseau d'imprimante.

Un driver d'imprimante est une application permettant au terminal d'envoyer vers l'imprimante des données pouvant être correctement interprétées par celle-ci.

Une impression est donc impossible si un driver d'impression n'est pas enregistré dans le terminal ou si le terminal veut accéder à un réseau d'imprimante distant.

L'invention a pour but de présenter une solution à une demande d'impression de la part d'un utilisateur d'un terminal n'ayant pas de driver d'impression préenregistré.

L'invention, à cet effet, concerne, un procédé pour fournir un service d'impression d'au moins une information en provenance d'un terminal de radiocommunication, caractérisé en ce que l'information transite via un serveur de contexte et de service situé dans le réseau vers une imprimante sélectionnée par le serveur de service en fonction des données contextuelles de l'utilisateur du terminal.

Dans un mode de réalisation particulier, l'invention propose également un procédé caractérisé en ce que l'information transite entre le serveur de contexte et de service vers l'imprimante via un serveur d'impression.

Suivant un autre aspect, l'invention se rapporte également à un serveur de contexte et de service pour la mise en oeuvre de ce procédé.

Le terminal selon l'invention peut être un assistant numérique personnel ou un ordinateur portable.

Ce terminal peut fonctionner dans un réseau cellulaire de type GSM850, GSM900, DCS (Digital Communication System en anglais), UMTS (Universal Mobile Telecommunications System en anglais), ou encore dans un réseau de type DECT (Digital European Cordless Telecommunications en anglais), ce terminal peut en outre également intégrer les fonctions GPS 1.5GHz (Global Positionning System en anglais) ou Wi-Fi 2.5GHz (Wireless Fidelity en anglais) ou fonctionner dans un réseau informatique local sans fil selon la norme IEEE 802.11 (ou la norme Bluetooth) quand il est dans la zone de couverture d'un réseau local sans fil.

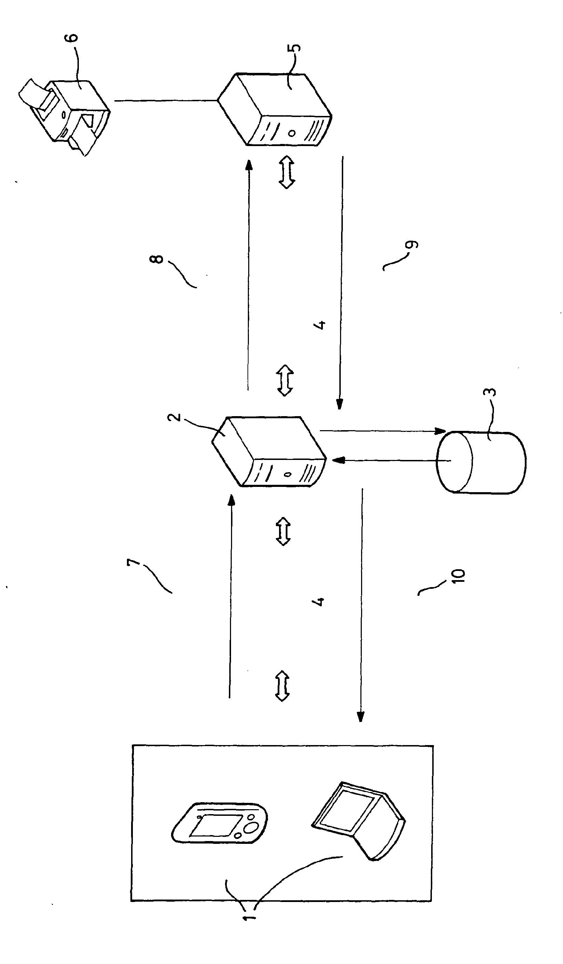

D'autres caractéristiques et avantages de l'invention apparaîtront à la lecture de la description suivante d'un mode de réalisation particulier de l'invention, donné à titre illustratif et pas limitatif, et de la figure l'accompagnant.

Cette figure illustre un exemple de mise en oeuvre du procédé de l'invention.

L'utilisateur du terminal 1 est associé à un certain nombre d'informations contextuelles le concernant.

Ces informations contextuelles sont pour partie fournies par une application enregistrée en interne dans le terminal 1 et pour partie fournies par un serveur de contexte et de service 2 (contexte and service broker en anglais) situé dans le réseau de radiocommunication.

Les informations contextuelles fournies par le serveur de contexte et de service 2 peuvent être extraites par le serveur de contexte et de service 2 d'une base de données utilisateur 3.

Le serveur de contexte et de service 2 reçoit des informations contextuelles du terminal de l'utilisateur ou d'autres sources de contexte connectées au réseau.

Ces informations contextuelles peuvent être liées à des situations contextuelles données.

Ces situations contextuelles données sont mémorisées dans le serveur de contexte et de service 2 au sein d'un répertoire de situations contextuelles.

Ces situations contextuelles peuvent être associées à des services configurés pouvant être rendus à l'utilisateur selon la situation contextuelle dans laquelle il se trouve.

Parmi ces services pouvant être rendus à l'utilisateur, on peut noter l'impression d'un document généré par l'utilisateur sur son terminal ou reçu par l'utilisateur sur son terminal.

Lorsque l'utilisateur arrive dans un réseau local inconnu de son terminal 1, le terminal 1 envoie au serveur de contexte et de service 2 des informations contextuelles concernant le type de réseau 4 dans lequel se situe le terminal 1 et une requête en impression 7 d'un document en couleur.

Le serveur de contexte et de service 2 consulte les informations contextuelles mémorisées dans la base de données utilisateur 3, par exemple son agenda.

Par exemple, à l'heure de la connexion du terminal 1 au réseau 4, l'utilisateur du terminal 1 est en réunion comme l'indique son agenda.

Le serveur de contexte et de service 2 envoie une requête en impression 8 vers un serveur d'impression 5 qui sélectionne l'imprimante 6 couleur la plus proche de la salle de réunion de l'utilisateur du terminal 1.

Pour ce faire, le serveur de contexte et de service 2 comprend un driver d'imprimante virtuel qui connaît l'adresse du serveur d'impression 5 qu'il doit contacter dans le réseau 4.

Le serveur d'impression 5 renvoie alors un message de résultat 9 vers le serveur de contexte et de service 2 qui renvoie un message de statut de l'impression 10 vers le terminal 1.

Si l'utilisateur du terminal, à l'heure de la connexion du terminal 1 au réseau 4, est dans une gare ferroviaire à destination de son entreprise par exemple, la requête en impression part via le réseau local de la gare vers le réseau d'entreprise où se trouve le serveur d'impression 5 qui sélectionne l'imprimante 6 du bureau de l'utilisateur.

## Revendications

1. Procédé pour fournir un service d'impression d'au moins une information en provenance d'un terminal de radiocommunication (1), situé dans un réseau de communication (4)
**caractérisé en ce que** l'information transite via un serveur de contexte et de service (2) situé dans le réseau (4) vers une imprimante (6) sélectionnée par le serveur de contexte et de service (2) en fonction des données contextuelles de l'utilisateur du terminal (1).

2. Procédé selon la revendication 1, **caractérisé en ce que** l'information transite entre le serveur de contexte et de service (2) vers l'imprimante (6) via un serveur d'impression (5).

3. Procédé selon les revendications 1 ou 2, **caractérisé en ce que** le serveur de contexte et de service (2) comprend un driver d'imprimante virtuel permettant qui connaît l'adresse du serveur d'impression (5) qu'il doit contacter dans le réseau (4).

4. Serveur de contexte et de service **caractérisé en ce qu'**il comporte des moyens pour remplir les fonctions selon l'une des revendications précédentes.
